# EUROPEAN PATENT SPECIFICATION

(11) **EP 0 322 372 B1**
(45) Date of publication and mention of the grant of the patent: **03.02.1993**
(21) Application number: 88830509.1
(22) Date of filing: 29.11.1988
(51) Int. Cl.: B60T 8/18

(54) **A braking modulator for a motor vehicle provided with a pneumatic braking system with spring parking-brake elements**
Bremsdruckregler für Kraftfahrzeuge mit Druckluftbremssystem und Federspeicherfeststellbremse
Modulateur de freinage pour véhicule automobile avec système pneumatique de freinage avec freins de stationnement à ressort

(30) Priority: 23.12.1987 IT 5391587 U
(43) Date of publication of application: 28.06.1989
(73) Proprietor: BENDIX HEAVY VEHICLE SYSTEMS ITALIA S.P.A., 20128 Milano (IT)
(72) Inventor: Angelillo, Domenico, I-20099 Sesto S. Giovanni Milano (IT)
(74) Representative: Quinterno, Giuseppe

(56) References cited:
- EP-A- 0 221 031
- EP-A- 0 308 376
- DE-A- 3 224 397
- DE-A- 3 439 086
- FR-A- 1 562 356
- GB-A- 2 074 680
- GB-A- 2 128 698

## Description

The present invention relates to a braking modulator for a motor vehicle provided with a pneumatic braking system with spring parking-brake elements.

More specifically, the invention concerns a braking modulator of the type specified in the preamble of the appended Claim 1.

EP-A-0 221 031 discloses a braking modulator of this kind for use in the braking system of a trailer.

Another braking modulator of this kind for use in the braking system of a trailer is described in EP-A-0 308 376 , which is not part of the state of the art according to Article 54 (2) EPC. In addition to the basic function of modulating the braking force with variations of the load bearing on the trailer, the braking modulator described therein also performs the function of an anti-overpressure valve, thus preventing the braking elements from being overloaded when the pedal-operated brake of the tractor unit and the manually-operated distributor of the parking brake are operated simultaneously.

The braking modulator devices for trailers described in the above-cited European patent applications include, in particular, a substantially tubular control member within which is disposed a non-return valve that enables a flow of pressurised air to pass through the member in one direction, particularly to enable the supply of pressure to the reservoir or reservoirs of the trailer.

According to the present invention, a modification of the braking modulator described in European patent application EP-A-0 221 031 is proposed, so as to enable its use in the braking system of a tractor.

This object is achieved, according to the invention, by means of a braking modulator of the type specified above, the main characteristics of which are defined in the characterising part of the appended Claim 1.

Further characteristics and advantages of the device according to the invention will become clear from the detailed description which follows with reference to the appended drawings, provided by way of non-limiting example, in which:
Figure 1 is a diagram of a part of a pneumatic braking system of a tractor unit, including a braking modulator according to the invention,
Figure 2 is a partially-sectioned view of a braking modulator according to the invention,
Figure 3 is a section which shows the detail indicated II in Figure 2, on an enlarged scale,
Figure 4 shows a variant of the part of the braking modulator shown in Figure 3.

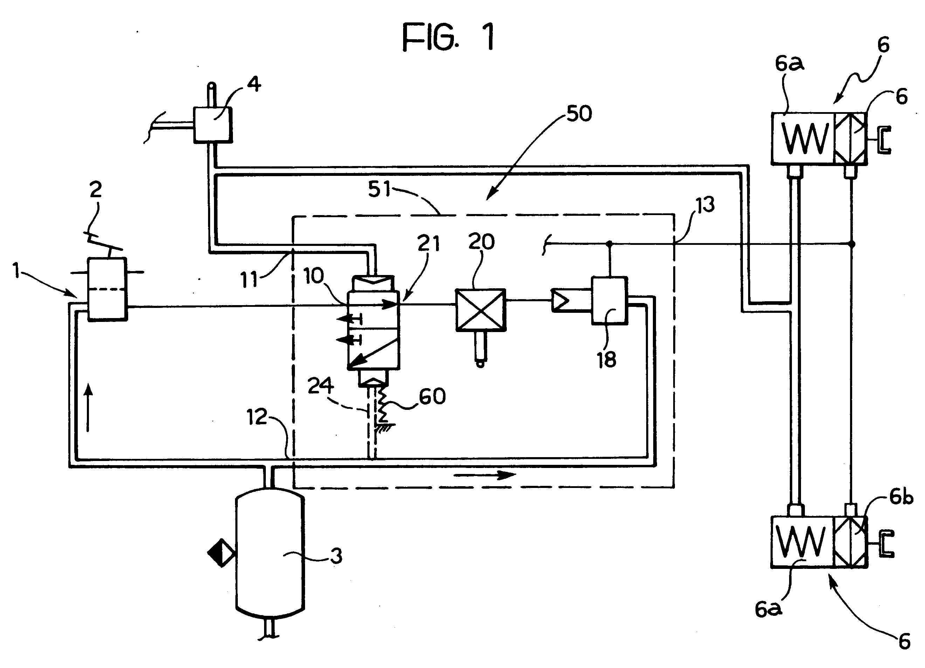

In Figure 1, part of the braking system of a tractor is illustrated and includes a brake-operating distributor 1 of the duplex or tandem type, connected to a pressure reservoir 3. A hand-operated distributor for operating the parking and emergency braking is indicated 4 and is connected to the spring-operated sections 6a of braking elements 6 associated with the wheels of the vehicle.

Each of these elements includes a respective air-pressure-operated section, indicated 6b.

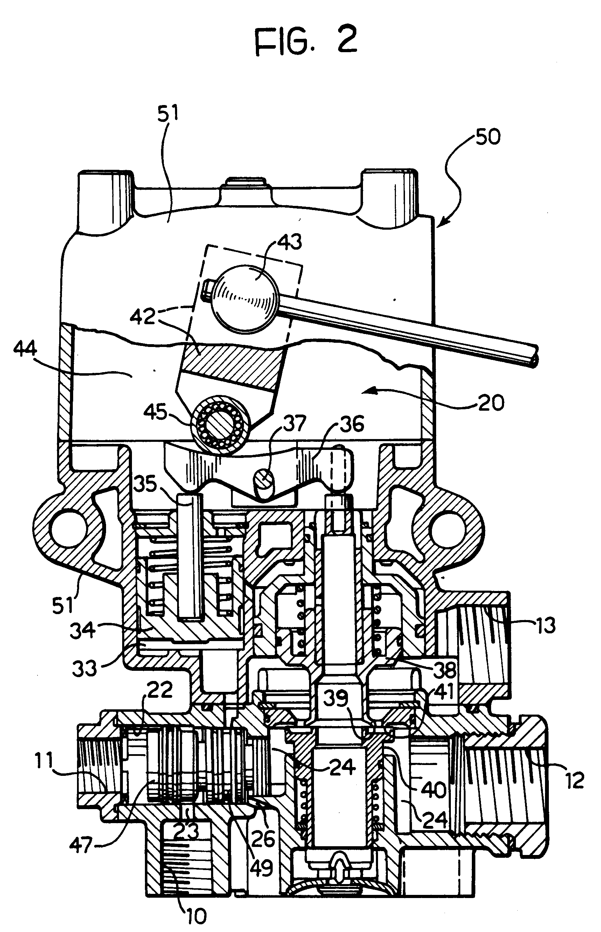

The output of the distributor 4 is also connected to a braking pressure modulator according to the invention, generally indicated 50 in Figure 1. Figure 1 shows the diagram equivalent to this device, which will be described in more detail from the structural point of view with reference to Figures 2 to 4. It comprises a single body 51 with an inlet connector 10 connected to the duplex distributor 2 and intended to receive a variable brake-operating pressure, an inlet connector 11 connected to the outlet of the hand-operated distributor 4, a further inlet 12 connected to the reservoir 3, and an outlet 13 connected to the operating sections 6b of the braking elements 6.

The inlet 12 communicates with a relay valve 18 which is intended to enable the application of the braking pressure to the operating sections 6b of the braking elements 6. This valve is controlled by a braking regulator 20 in dependence on the load bearing on the vehicle and on the brake-operating pressure supplied to the inlet 10 of the modulator 50. A distributor 21 is interposed between the inlet connector 10 of the modulator and the braking regulator 20 and, in Figure 1, is shown as a two-position distributor which is subject on one side to the pressure supplied to the connector 11 and on the other side to an opposing force which, as will be seen below, may be constituted by the force of pressurised air coming from the reservoir 3 through a branch 24 or by the force developed by a reacting spring, indicated 60 in Figure 1.

Under the action of the pressure supplied to the connector 11, the distributor 21 normally enables the passage of pressurised air from the inlet connector 10 to the braking regulator 20. As will be seen below, upon a decrease in the pressure at the inlet 11, the distributor disconnects the inlet 10 from the regulator 20 and puts the inlet of the latter into connection with a discharge to the atmosphere.

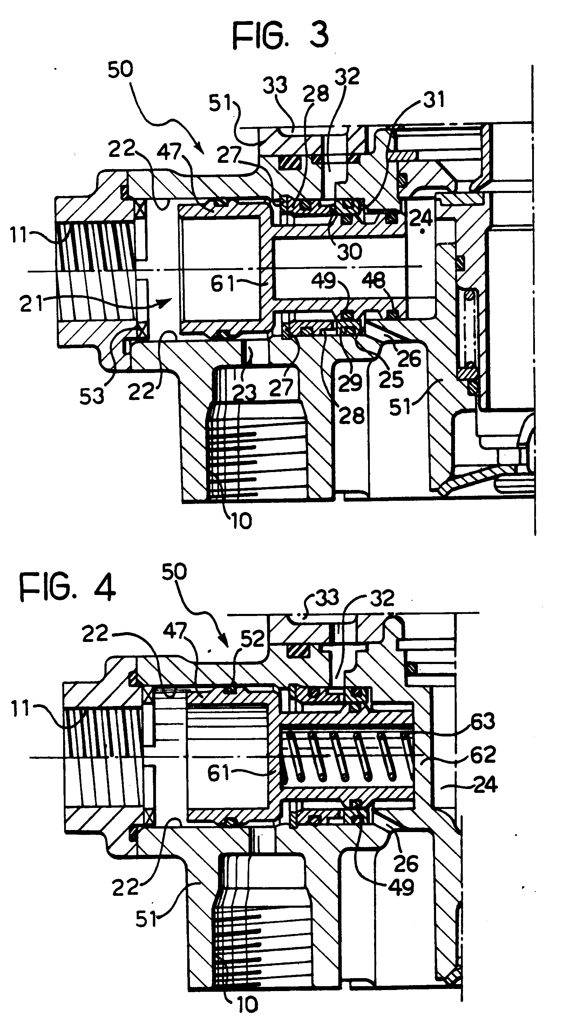

The pressure modulator 50 illustrated schematically in Figure 1 can be produced in accordance with the invention in the manner shown in detail in Figures 2 and 3, in which parts and components already described above have again been given the same reference numerals.

Within the body 51, the connector 11 opens into a substantially cylindrical inlet chamber 22, in the lower part of the wall of which is defined an aperture 23 that opens into the inlet connector 10. At the end opposite the connector 11, the chamber 22 communicates with an annular chamber 24 which in turn communicates with the inlet connector 12 (Figure 2). The wall of the chamber 22 adjacent the chamber 24 (Figure 3) forms a shoulder 25 in the lower portion of which is defined a passage 26 which passes through the wall of the body 51 and opens into the atmosphere.

A stop ring 27 between the aperture 23 and the chamber 24 holds in position an annular element 28 in which at least one annular passage 30 is formed. The element 28 defines with the shoulder 25 an annular space 31 communicating with the discharge passage 26.

The inner surface of the element 28 is flush with the end portion of the chamber 22, between the shoulder 25 and the chamber 24.

Finally, a further passage 32 is formed in the wall of the chamber 22 and faces the space 30. The region inside the element 28 can be put into communication with a chamber 33 which constitutes the control chamber of the braking regulator, through the space and the passage 32.

The regulator includes a piston 34 (Figure 2) which is movable in the chamber 33 and the rod 35 of which cooperates with a first end of a rocker arm 36 pivoted with clearance at 37. The other end of the rocker arm cooperates with a piston 38 whose lower end forms an annular valve seat 39 which cooperates with an obturator 40 movable in the chamber 24. This obturator can also cooperate with a fixed seat 41 for controlling communication between the inlet connector 12 and the outlet connectors 13. The piston 38, the obturator 40 and the seat 41 together constitute the relay valve generally indicated 18 in Figure 1.

Finally, the braking regulator includes a member 42 which pivots on a pin 43 in a chamber 44 formed in the upper part of the body 51. At its bottom, the member 42 carries a rotary roller 45 which can slide on the upper surface of the rocker arm 36. The angular position of the member 42 depends on the position assumed by a lever 46 fixed to the portion of the pivot 43 which projects from the body 51. This lever is intended to be connected in known manner to an axle of the vehicle, whilst the body 51 is intended to be fixed to the suspended part of the motor vehicle. Consequently, the position of the shaft 46, and hence the point of contact between the roller 45 and the rocker arm 36, depends on the load bearing on the vehicle. The roller 45 thus acts as a movable pivot for the rocker arm 36: the effective lengths of the two ends of the rocker arm, and hence the force transmission ratio between the piston 34 and the piston 38, vary with variations in the load.

Returning now to the inlet chamber 22, a substantially tubular distributor member 47 is sealingly slidable therein. This member comprises a larger-diameter portion which is slidable in the portion of the chamber 22 between the connector 11 and the aperture 23, and a second, smaller-diameter portion having two outer, annular grooved projections in which respective sealing rings, indicated 48 and 49, are situated.

Between the two portions, the member 47 has a transverse wall or septum 61.

A sealing ring carried externally by the larger-diameter portion of the distributor member 47, however, is indicated 52 and cooperates with the wall of the chamber 22 to prevent communication between the inlet connectors 10 and 11.

The distributor member 47 carries out the functions of the distributor indicated 21 in the diagram of Figure 1.

When the hand distributor 4 is in the de-activated condition, the distributor member 47 is subject to the same air pressure at both ends. It is therefore situated in the position shown in Figures 2 and 3 by virtue of the larger section which is presented to the pressure supplied through the connector 11. In this condition, the inlet connector 10 communicates with the control chamber 33 of the braking regulator through the aperture 23, an annular space defined between the distributor member 47 and the ring 28, the space 30, and the passage 32. When a brake-operating pressure is applied to the connector 10 (Figure 2), the relay valve 38-41 is opened by means of the braking regulator and pressurised air passes from the inlet connector 12 to the connectors 13 and hence activates the braking elements, with a force which depends on the load bearing on the vehicle.

If the distributor 4 is operated during the application of the service brakes (Figure 1), the pressure at the connector 11 decreases and the member 47 is moved to the left, against a stop ring 53 (Figure 3), under the action of the pressure acting on its smaller-section portion. In this condition, the sealing ring 49 is in contact with the inner surface of the ring 28, to the left of the space 30 defined in the ring. The inlet connector 10 is thus disconnected from the passage 32 and therefore from the control chamber 33 of the braking regulator. In this condition, the sealing ring 48 is still to the right of the space 31 facing the discharge passage 26. The chamber 33 therefore communicates with the atmosphere through the passage 32, the space 30 and the passage 26. In effect, in this situation, the space 30 faces the annular region between the two projections of the member 47 which carry the sealing rings 48 and 49.

As can be seen, the operation of the parking and emergency braking distributor 4, as well as causing the activation of the braking elements by means of the respective spring sections, causes the braking pressure applied to the operating sections 6b of the braking elements to be cancelled out, so as to prevent overloading.

Thus, the modulator device can also perform the function of an anti-overpressure valve.

In Figure 4, which shows a variant of the device according to Figures 2 and 3, parts and elements already described have again been given the same reference numerals.

In the variant of Figure 4, the inlet chamber 22 is separated from the chamber 24 by a wall, indicated 62. Moreover, the distributor 47 has no sealing ring 48 and a helical spring 63 is situated in its smaller-diameter end portion, reacting at one end against the wall 61 and at the other end against the wall 62 of the body 51.

In the embodiment of Figure 4, therefore, the member 47 is subject at one side to the force developed by the pressure supplied to the connector 11 of the body 51, and to the opposing force developed by the spring 63.

The operation of the device according to Figure 4 is similar to that of Figure 3: when the parking and emergency brake-operating distributor 4 is operated, the pressure supplied to the connector 11 decreases and the member 47 is thrust towards the left by the spring 63. In this case also, the connector 10 is disconnected from the control chamber 33 and the latter is put into communication with the discharge, thus preventing the overloading of the braking elements.

## Claims

1. A braking modulator for a vehicle provided with a pneumatic braking system with spring parking-brake elements (6), comprising:
a body (51) with a first inlet opening (10) for receiving a variable brake-operating pressure, second and third inlet openings (12, 11) for receiving a power-supply pressure, and at least one outlet opening (13) for delivering a braking pressure to the braking elements (6),
valve means (38-41) which control communication between the second inlet opening (12) and the outlet opening (13), and
means (33 to 37; 42 to 46) for controlling the opening of the valve means (38-41) in dependence on the load bearing on the vehicle and on the brake-operating pressure, the control means including a control piston (34) movable in a control chamber (33) which can communicate with the first inlet opening (10);
the body (51) defining an inlet chamber (22) which communicates with the third inlet opening (11) and in which is mounted a control member (47) exposed to the pressure supplied through the third opening (11) of the body (51) and adapted to assume
a first position in which it enables communication between the first inlet opening (10) and the control chamber (33), when the supply pressure is supplied to the third inlet opening (11), and
a second position in which it shuts off the first inlet opening (10) of the body, when the pressure supplied to the third inlet opening (11) falls below a predetermined value, so as to prevent the overloading of the brakes;
characterised in that said inlet chamber (22) is provided with a discharge passage (26) which communicates with the atmosphere ; said discharge passage (26) being in such a position as to be shut off by said control member (47) when the control member (47) is in its first position, and to be put in communication with the control chamber (33) when said control member (47) is in its second position, and in that for use in the braking system of a tractor provided with a hand-operated distributor (4) for operating the parking and emergency braking, the third inlet opening (11) is to be connected to the hand-operated distributor (4) and the control member (47) is formed so as to present a blocking surface (61) to the pressure supplied to the third opening (11) of the body.

2. A braking modulator according to Claim 1, characterised in that the inlet chamber (22) of the body (51) communicates with the second inlet opening (12) so that, in operation, pressure supplied to the second inlet opening (12) thrusts the control member (47) in the direction opposing the pressure supplied to the third inlet opening (11) of the body (51).

3. A braking modulator according to Claim 1, characterised in that it includes resilient means (63) which act on the control member (47) in the direction opposing the pressure supplied to the third inlet opening (11) of the body (51).

## Patentansprüche

1. Bremsdruckregler für ein Kraftfahrzeug mit Druckluftbremssystem und Federfeststellbremselementen (6), umfassend:
einen Körper (51) mit einer ersten Einlaßöffnung (10) zum Empfang eines veränderlichen Bremsbetätigungsdruckes, zweiten und dritten Einlaßöffnungen (12, 11) zum Empfang eines Kraftzufuhrdruckes, und zumindest einer Auslaßöffnung (13) zur Zufuhr eines Bremsdruckes an die Bremselemente (6),
Ventilvorrichtungen (38-41), die die Verbindung zwischen der zweiten Einlaßöffnung (12) und der Auslaßöffnung (13) steuern, und
Vorrichtungen (33 bis 37; 42 bis 46) zur Steuerung des Öffnens der Ventilvorrichtungen (38-41) in Abhängigkeit von der Last, die auf das Fahrzeug wirkt, und von dem Bremsbetätigungsdruck, wobei die Steuervorrichtungen einen Steuerkolben (34) aufweisen, der in einer Steuerkammer (33) bewegbar ist, die mit der ersten Einlaßöffnung (10) kommunizieren kann;
wobei der Körper (51) eine Einlaßkammer (22) definiert, die mit der dritten Einlaßöffnung (11) kommuniziert und in der ein Steuerelement (47) angeordnet ist, welches dem durch die dritte Öffnung (11) des Körpers (51) zugeführten Druck ausgesetzt ist und so ausgelegt ist, daß es
eine erste Position einnimmt, in der es eine Verbindung zwischen der ersten Einlaßöffnung (10) und der Steuerkammer (33) ermöglicht, wenn der Zufuhrdruck an die dritte Einlaßöffnung (11) zugeführt wird, und
eine zweite Position, in der es die erste Einlaßöffnung (10) des Körpers abschließt, wenn der an die dritte Einlaßöffnung (11) gelegte Druck unter einen vorbestimmten Wert absinkt, um eine Überlastung der Bremsen zu verhindern;
**dadurch gekennzeichnet,**
daß die Einlaßkammer (22) mit einem Abflußdurchlaß (26) versehen ist, der mit der Atmosphäre kommuniziert; wobei dieser Abflußdurchlaß (26) sich in einer derartigen Position befindet, daß er durch das Steuerelement (47) abgeschlossen wird, wenn das Steuerelement (47) sich in seiner ersten Position befindet, und er in Verbindung mit der Steuerkammer (33) gebracht wird, wenn das Steuerelement (47) sich in seiner zweiten Position befindet, und dadurch, daß zur Verwendung in dem Bremssystem eines Zugfahrzeuges, welches mit einem von Hand betätigten Verteiler (4) zur Betätigung der Feststell- und Notbremsen versehen ist, die dritte Einlaßöffnung (11) mit dem von Hand betätigten Verteiler (4) zu verbinden ist und das Steuerelement (47) so ausgebildet ist, daß es eine Blockieroberfläche (61) für den an die dritte Öffnung (11) des Körpers zugeführten Druck darstellt.

2. Bremsdruckregler gemäß Anspruch 1,
**dadurch gekennzeichnet,**
daß die Einlaßkammer (22) der Körpers (51) mit der zweiten Einlaßöffnung (12) kommuniziert, so daß im Betrieb Druck, welcher an die zweite Einlaßöffnung (12) geführt wird, das Steuerelement (47) in die Richtung drängt, die dem an die dritte Einlaßöffnung (11) des Körpers (51) geführten Druck entgegengesetzt ist.

3. Bremsdruckregler gemäß Anspruch 1,
**dadurch gekennzeichnet,**
daß er federnde Vorrichtungen (63) aufweist, die auf das Steuerelement (47) in der Richtung wirken, die dem an die dritte Einlaßöffnung (11) des Körpers (51) geführten Druck entgegengesetzt ist.

## Revendications

1. Modulateur de freinage pour véhicule avec système pneumatique de freinage avec freins (6) de stationnement à ressort, comprenant :
un corps (51) avec une première ouverture d'entrée (10) destinée à recevoir une pression variable de commande de frein, des seconde et troisième ouvertures d'entrée (12, 11) pour recevoir une pression d'alimentation, et au moins une ouverture de sortie (13) pour délivrer une pression de freinage aux freins (6),
des moyens à clapet (38-41) qui commandent la communication entre la seconde ouverture d'entrée (12) et l'ouverture de sortie (13), et
des moyens (33 à 37 ; 42 à 46) pour commander l'ouverture des moyens à clapet (38-41) en fonction de la charge portant sur le véhicule et de la pression de commande des freins, les moyens de commande comprenant un piston de commande (34) pouvant se déplacer dans une chambre de commande (33) qui peut communiquer avec la première ouverture d'entrée (10) ;
le corps (51) définissant une chambre d'entrée (22) qui communique avec la troisième ouverture d'entrée (11) et dans laquelle est monté un élément de commande (47) exposé à la pression amenée à travers la troisième ouverture (11) du corps (51) et prévu pour adopter
une première position dans laquelle il permet la communication entre la première ouverture d'entrée (10) et la chambre de commande (33), lorsque la pression d'alimentation est amenée à la troisième ouverture d'entrée (11), et
une seconde position dans laquelle il ferme la première ouverture d'entrée (10) du corps, lorsque la pression amenée a la troisième ouverture d'entrée (11) tombe au-dessous d'une valeur prédéterminée, de manière à empêcher la surcharge des freins ;
caractérisé en ce que ladite chambre d'entrée (22) est équipée d'un passage de décharge (26) qui communique avec l'atmosphère ; ledit passage de décharge (26) étant dans une position qui lui permet d'être fermé par ledit élément de commande (47) lorsque l'élément de commande (47) est dans sa première position, et d'être mis en communication avec la chambre de commande (33) lorsque ledit élément de commande (47) est dans sa seconde position, et en ce que pour une utilisation dans le système de freinage d'un véhicule tracteur muni d'un distributeur (4) à commande manuelle pour actionner le frein de stationnement et de secours, la troisième ouverture d'entrée (11) doit être reliée au distributeur (4) à commande manuelle et l'élément de commande (47) est formé de manière à présenter une surface de blocage (61) vis à vis de la pression amenée à la troisième ouverture (11) du corps.

2. Modulateur de freinage selon la revendication 1, caractérisé en ce que la chambre d'entrée (22) du corps (51) communique avec la seconde ouverture d'entrée (12) de sorte que, lors du fonctionnement, la pression amenée à la seconde ouverture d'entrée (12) pousse l'élément de commande (47) dans la direction opposée à la pression amenée à la troisième ouverture d'entrée (11) du corps (51).

3. Modulateur de freinage selon la revendication 1, caractérisé en ce qu'il comprend des moyens élastiques (63) qui agissent sur l'élément de commande (47) dans la direction opposée à la pression amenée à la troisième ouverture d'entrée (11) du corps (51).
